# EUROPÄISCHE PATENTANMELDUNG

(11) **EP 4 745 106 A1**
(43) Veröffentlichungstag der Anmeldung: **20.05.2026**
(21) Anmeldenummer: 25214952.1
(22) Anmeldetag: 11.11.2025
(51) Int. Cl.: C04B 7/52, B02C 23/06

(54) **MAHLVERFAHREN ZUM TROCKENEN MAHLEN EINES STÜCKIGEN MAHLGUTES UND VERFAHREN ZUR HERSTELLUNG EINES ZEMENTS**

(30) Priorität: 13.11.2024 DE 102024133260
(71) Anmelder: Buzzi S.P.A., 15033 Casale Monferrato (AL) (IT); Dyckerhoff GmbH, 65203 Wiesbaden (DE)
(72) Erfinder: Canonico, Fulvio, 15033 Casale Monferrato (IT); Pellegrino, Alberta, 15033 Casale Monferrato (IT); Schubert, Stefan, 65203 Wiesbaden (DE)
(74) Vertreter: Dr. Solf & Zapf Patent- und Rechtsanwalts PartG mbB

(57) **Zusammenfassung**

Die vorliegende Erfindung betrifft ein Mahlverfahren zum trockenen Mahlen eines schüttfähigen bzw. stückigen Mahlgutes aufweisend Mahlgutpartikel aus zumindest einem anorganischen Material, vorzugsweise Mahlgutpartikel aus Zementklinker, bevorzugt aus Portlandzementklinker und/oder Tonerdezementklinker und/oder Calciumsulfoaluminatzementklinker, und/oder anderen anorganischen Zementbestandteilen. Die Erfindung betrifft zudem ein Verfahren zur Herstellung eines Zements aus dem durch Mahlen hergestellten Mehl.

## Beschreibung

Die vorliegende Erfindung betrifft ein Mahlverfahren zum trockenen Mahlen eines schüttfähigen bzw. stückigen Mahlgutes aufweisend Mahlgutpartikel aus zumindest einem anorganischen Material, vorzugsweise Mahlgutpartikel aus Zementklinker, bevorzugt aus Portlandzementklinker und/oder Tonerdezementklinker und/oder Calciumsulfoaluminatzementklinker, und/oder anderen anorganischen Zementbestandteilen. Die Erfindung betrifft zudem ein Verfahren zur Herstellung eines Zements aus dem durch Mahlen hergestellten Mehl.

Schüttfähig meint, dass das Mahlgut in Form eines Schüttguts vorliegt. Ein Schüttgut ist bekanntermaßen ein aus einzelnen Partikeln bzw. Körnern bestehendes Gemenge (=stückiges Material), das in einer schüttfähigen Form vorliegt.

Zement ist bekanntermaßen ein hydraulisches, anorganisches Bindemittel, welches durch die chemische Reaktion mit Wasser erstarrt und erhärtet (Hydratation) und nach dem Erhärten auch unter Wasser beständig bleibt. Zement ist feingemahlen bzw. mehlförmig. Er besteht aus einem Gemisch fein aufgemahlener, nichtmetallisch-anorganischer Bestandteile. Es handelt sich ebenfalls um ein Schüttgut.

Unter mehlförmig wird im Rahmen der Erfindung eine Korngröße ≤ 150 µm verstanden.

Sofern nicht anders angegeben, erfolgt zudem die Bestimmung von Korngrößen im Rahmen der Erfindung mittels Laserlichtbeugung gemäß ISO 13320:2020-01.

Zemente können unter anderem anhand des im Zement enthaltenden Zementklinkers unterschieden werden:
Portlandzementklinker aufweisende Zemente werden nach ihrer Zusammensetzung gemäß der DIN EN 197-1:2011-11 und der DIN EN 197-5:2021-07 in unterschiedliche Zementarten bzw. Normalzemente bzw. Normzemente CEM I-VI eingeteilt. Die unterschiedlichen Zementarten enthalten alle mindestens 95 M.-% Hauptbestandteile und höchstens 5 M.-% Nebenbestandteile, bezogen auf die Summe an Haupt- und Nebenbestandteilen. Bei den Hauptbestandteilen handelt es sich neben Portlandzementklinker (K) um Hüttensand (S), Silicastaub (D), natürliche Puzzolane (P), natürliche getemperte Puzzolane (Q), kieselsäurereiche Flugasche (V), kalkreiche Flugasche (W), gebrannten Schiefer (T), Kalkstein (L oder LL). Ein Hauptbestandteil muss mit mindestens 5 M.-% bezogen auf die Summe an Haupt- und Nebenbestandteilen enthalten sein.

Portlandzementklinker besteht bekanntermaßen im Wesentlichen aus den vier Klinkerphasen Tricalciumsilikat (Alit) C₃S, Dicalciumsilikat (Belit) C₂S, Tricalciumaluminat C₃A und Tetracalciumaluminatferrit C₄AF. Zudem kann Portlandzementklinker freies CaO (Calciumoxid) aufweisen. Die Klinkerphasen reagieren bei der Hydratation bekanntermaßen hauptsächlich zu Calciumsilikathydratphasen (CSH-Phasen). Bei der Hydratation von C₃S und C₂S bildet sich zudem bekanntermaßen Portlandit (Calciumhydroxid (Ca(OH)₂)).

Bei den Nebenbestandteilen handelt es sich um besonders ausgewählte, anorganische natürliche mineralische Stoffe, anorganische mineralische Stoffe, die aus der Klinkerherstellung stammen, oder Bestandteile wie in 5.2 der DIN EN 197-1:2011-11 beschrieben, es sei denn, sie sind bereits als Hauptbestandteile im Zement enthalten.

Portlandzementklinker aufweisender Zement enthält zudem zusätzlich zu den Haupt- und Nebenbestandteilen Calciumsulfat zur Regelung des Erstarrungsverhaltens. Calciumsulfat kann in Form von Gips, Halbhydrat oder Anhydrit oder einer Mischung davon enthalten sein. Der Anteil an Calciumsulfatträger wird auf die Summe an Haupt- und Nebenbestandteilen bezogen.

Tonerdezement (=Tonerdeschmelzzement oder Calciumaluminatzement oder CAC-Zement) ist beispielsweise in der DIN EN 14647: 2006-01 genormt. Tonerdezement weist Tonerdezementklinker auf. Dieser unterscheidet sich in seiner Phasenzusammensetzung grundlegend vom Portlandzementklinker der silikatreichen Normzemente. Wesentlicher Bestandteil von Tonerdezementklinker ist Monocalciumaluminat CA. Zudem kann in kalkreicheren Tonerdezementklinkern C₁₂A₇ und in kalkärmeren CA₂ enthalten sein. Die Klinkerphasen reagieren bei der Hydratation bekanntermaßen hauptsächlich zu Calciumaluminathydratphasen (CAH-Phasen).

Auch Calciumaluminatklinker enthaltende Zemente können zudem weitere anorganische Zementbestandteile enthalten.

Calciumsulfoaluminatzement (= CSA-Zement) ist eine in China entwickelte Zementart. Er besteht in der Regel aus Calciumsulfoaluminatklinker und Anreger, z.B. Gips oder Anhydrit. Er kann aber auch ausschließlich aus gemahlenem Calciumsulfoaluminatklinker bestehen. Calciumsulfoaluminatklinker hat als Hauptkomponente das wasserfreie Sulfat Ye'elimit der Zusammensetzung C₃A₃Cs (Ca₄Al₆O₁₂(SO₄). Daneben koexistieren C₂S (Belit), Gehlenit, Brownmillerit, Ternesit, Spinell und weitere Nebenphasen. Werden zur Herstellung eisenreiche Rohstoffe verwendet, entsteht ein ferritischer Calciumsulfoaluminatklinker. Bei der Hydratation von Calciumsulfoaluminatzement können sich Ettringit, Monosulfat, Aluminiumhydroxid, CSH-Phasen, Strätlingit und Calciumhydroxid bilden.

Auch Calciumsulfoaluminatklinker enthaltende Zemente können zudem weitere anorganische Zementbestandteile enthalten.

Bekannt sind zudem Zemente, die zur Steuerung bestimmter Eigenschaften mehrere verschiedene Zementklinker enthalten. Schnellzemente weisen beispielsweise in der Regel Portlandzementklinker und Tonerdezementklinker auf.

Ein Zement bzw. eine Zementmischung kann grundsätzlich durch gemeinsames trockenes Mahlen des Zementklinkers mit einem oder mehreren der anderen Zementbestandteile oder durch Mischen getrennt feingemahlener Zementbestandteile hergestellt werden.

Bei der Trockenmahlung bzw. dem trockenen Mahlen wird bekanntermaßen ein Schüttgut bzw. ein loses Feststoffgemenge bzw. stückiges Mahlgut gemahlen. Das Mahlgut kann dabei einen geringen Feuchtegehalt aufweisen. Bei der Nassmahlung hingegen wird das Mahlgut mit einer Flüssigkeit gemischt und in der Mühle eine Suspension bzw. Slurry gemahlen.

Bei der trockenen Vermahlung von Zementklinker und/oder anderer Zementbestandteile wird in der Regel ein Mahlhilfsmittel bzw. Trockenmahlhilfsmittel verwendet.

Derartige Mahlhilfsmittel dienen dazu, den Durchsatz zu erhöhen, die Energieeffizienz zu verbessern und um die Zementqualität zu modifizieren. Mahlhilfsmittel wirken einer (Re-)Agglomeration der Mahlgutpartikel entgegen und helfen dadurch Anhaftungen in der Mühle zu reduzieren, die Durchsatzgeschwindigkeit zu erhöhen, die Mahlfeinheit und damit die spezifische Oberfläche und die Reaktivität des Mahlgutes zu erhöhen. Mahlhilfsmittel interagieren mit der Oberfläche der Partikel und neutralisieren elektrische Oberflächenladungen (ungesättigte Valenzen an frischen Bruchflächen) und/oder erzeugen gleichgerichtete Ladungen an der Oberfläche, wodurch die Anziehung zwischen den einzelnen Partikeln verringert oder aufgehoben wird.

In der Regel werden die Mahlhilfsmittel zusammen mit dem zumindest einen zu mahlenden Zementbestandteil, vorzugsweise dem Zementklinker, am Eingang der Zementmühle zugegeben. Die Zugabemenge beträgt dabei in der Regel 0,01-0,2 M.-% (Masse-%), bezogen auf die Trockenmasse des zu mahlenden Mahlgutes.

Des Weiteren handelt es sich bei den Mahlhilfsmitteln in der Regel um organische Stoffe, beispielsweise um Glykole, Alkohole, Zucker, Zuckerderivate, Amine und deren Salze, Carbonsäuren und deren Salze, Ligningsulfonate, Polycarboxylatether.

Aus der CN 112456850 A und der website https://www.axinocapi-tal.de/news/first-garaphene/die-kommerzialisierung-von-co2-reduzierten-beton-produkten-beschleunigt-sich ist aber auch die Verwendung von Graphen als Mahlhilfsmittel bekannt. Bei Graphen handelt es sich um eine Kohlenstoffmodifikation mit zweidimensionaler Struktur. Jedes Kohlenstoffatom ist im Winkel von 120° mit drei weiteren verbunden, so dass sich ein bienenwabenförmiges Muster ausbildet. Diese Mahlhilfsmittel sind allerdings sehr teuer.

Des Weiteren offenbart die WO 96/06056 A1 ein Mahlhilfsmittel bestehend aus einer Mischung aus zumindest einem Alkylenglykol der Formel HO(AO)ₙH und partikelförmigem Kohlenstoff in einem Mengenverhältnis von 1:0,01 bis 1:0,5. Dabei handelt es sich bei A um ein C₂ - C₃ Alkylen und n ist eine ganze Zahl von 1 bis 5. Bei dem partikelförmigen Kohlenstoff kann es sich beispielsweise um mineralischen Kohlenstoff, z.B. aus fossiler Kohle oder dergleichen oder aus Ruß, erhalten durch thermisches Cracking oder Zersetzung von Kohlenwasserstoffen, handeln. Die Verwendung des Mahlhilfsmittels soll die Frühfestigkeiten des Zements verbessern.

Aufgabe der vorliegenden Erfindung ist die Bereitstellung eines nachhaltigen Mahlverfahrens zum trockenen Mahlen eines stückigen Mahlgutes, das Mahlgutpartikel aus zumindest einem anorganischen Material, vorzugsweise aus Zementklinker, aufweist, wobei das durch das Mahlverfahren erzeugte, gemahlene Produkt, insbesondere der Zement, einen geringen CO₂ Emissionsfaktor aufweisen soll. Zudem soll ein nachhaltiges Verfahren zur Herstellung eines Zements angegeben werden.

Diese Aufgaben werden durch ein Mahlverfahren mit den Merkmalen von Anspruch 1 und eine Verfahren zur Herstellung eines Zements mit den Merkmalen von Anspruch 14 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigt:

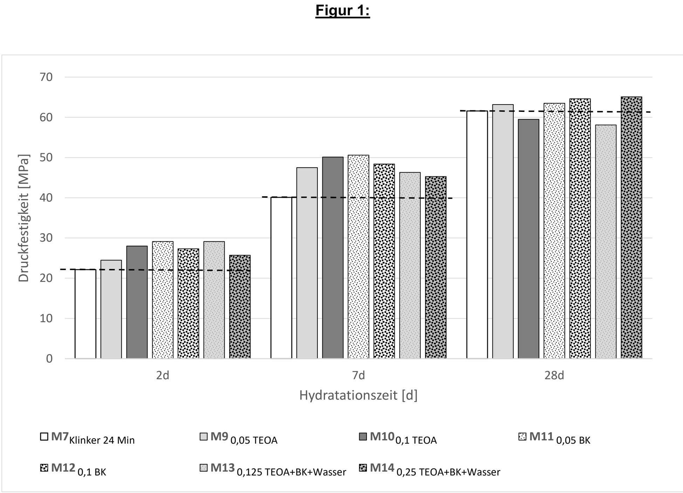

- Figur 1:: Die Druckfestigkeiten von unterschiedlichen Norm-Mörteln, hergestellt ohne die Verwendung von Mahlhilfsmittel sowie unter Verwendung von unterschiedlichen Mahlhilfsmitteln in unterschiedlichen Dosierungen bei gleicher Mahldauer

Im Rahmen der Erfindung wurde herausgefunden, dass zum trockenen Mahlen eines stückigen Mahlguts, aufweisend Mahlgutpartikel aus zumindest einem anorganischen Material, vorzugsweise aus Zementklinker und/oder anderen anorganischen Zementbestandteilen, zumindest ein Mahlhilfsmittel verwendet werden kann, welches körnige bzw. partikelförmige Biokohle bzw. Pflanzenkohle enthält und dadurch die Feinheit des gemahlenen mehlförmigen Endprodukts deutlich verbessert werden kann. Zudem kann der CO₂-Fußabdruck des aus dem gemahlenen Produkt hergestellten Zements gesenkt werden.

Worauf die Wirkung der Biokohle beruht, ist noch nicht abschließend geklärt. Es wird vermutet, dass die Biokohle als Oberflächenbeschichtung der Mahlgutpartikel wirkt und dadurch deren Agglomeration verhindert.

Außerdem könnte die hohe Porosität der Biokohle helfen, die spezifische Oberfläche zu des hergestellten Zements verbessern.

Dabei umfasst der Begriff "Körnung" bzw. "körniger Werkstoff" bzw. partikelförmiger Werkstoff" im Sinne der Erfindung einen Feststoff, der aus vielen kleinen, festen Körnern bzw. Partikeln besteht.

Biokohle wird bekanntermaßen durch pyrolytische Verkohlung von Biomasse hergestellt. Hauptsächlich ist die Biomasse pflanzlichen Ursprungs. Man bezeichnet diese Biokohle auch als Pyrolyse-Biokohle. Die bei der pyrolytischen Verkohlung entstehende Biokohle weist einen hohen Kohlenstoffgehalt auf. Es wird also das von den Pflanzen zuvor aufgenommene CO₂ in festen, stabilen Kohlenstoff umgewandelt. Im Gegensatz zur herkömmlichen Verbrennung wird bei der Pyrolyse pro 1 Tonne Biomasse deutlich weniger CO₂ emittiert. Insbesondere werden pro 1 Tonne Biomasse ca. 0,7 Tonnen CO₂ emittiert und ca. 0,35 Tonnen Biokohle produziert, was einer Bindung von 0,8 Tonnen CO₂ entspricht.

Bereits aus diesem Grund wird der CO₂-Fußabdruck des unter Verwendung von Biokohle enthaltendem Mahlhilfsmittel hergestellten Zements gesenkt.

Die Herstellung der Biokohle erfolgt zudem vorzugsweise durch langsame Pyrolyse der Biomasse in einer sauerstoffarmen Atmosphäre in einem Temperaturbereich von 300 - 700 °C. Bei höheren Temperaturen entstehen bekanntermaßen vermehrt flüssige oder gasförmige Pyrolyseprodukte.

Die Biokohle wird nach der Pyrolyse in der Regel gebrochen, gesiebt und klassiert.

Die so hergestellte Biokohle weist auf der Oberfläche funktionelle, insbesondere organische, Gruppen, unter anderem Carboxylgruppen, auf, welche das Einbinden der Biokohlepartikel in anorganische Systeme erleichtern. Sie können beispielsweise zur Keimbildung bei der Hydratation beitragen und die Frühfestigkeit verbessern. Aufgrund von verbesserten Frühfestigkeiten kann wiederum der Klinkergehalt im Zement verringert werden, wodurch ebenfalls der CO₂-Fußabdruck gesenkt wird.

Es wird zudem vermutet, dass die funktionellen Gruppen als Ionentauscher wirken und dadurch die Mahlbarkeit des Mahlguts verbessert wird.

Insbesondere weist Biokohle einen höheren Gehalt an funktionellen Gruppen als Ruß und Graphen auf.

Biokohle enthält neben dem organischen Kohlenstoff zudem weitere anorganische Elemente wie zum Beispiel Ca, Mg, Si, Fe oder Zn.

Insbesondere enthält im Gegensatz beispielsweise zu Graphen Biokohle auch anorganische Verbindungen, die in ihrer Gesamtheit als mineralische Asche bezeichnet werden (z.B. Al₂O₃, CaO, MgO, MnO₂, Fe₂O₃, Na₂O oder K₂O, SiO₂, SO₃, P₂O₅). Es wird vermutet, dass die mineralische Asche ebenfalls die Festigkeitsentwicklung positiv beeinflusst.

Selbstverständlich führt die Verwendung des erfindungsgemäßen Mahlhilfsmittels auch zur einer Verringerung der zum Mahlen notwendigen Mahlenergie. Denn die notwendigen Feinheiten werden bereits nach einer geringeren Mahldauer erreicht.

Die in dem Mahlhilfsmittel enthaltene körnige bzw. partikelförmige Biokohle kann zudem aus einer einzigen Biokohlesorte bestehen oder eine Mischung aus verschiedenen Biokohlesorten sein. Die verschiedenen Biokohlesorten können sich beispielsweise aufgrund von Unterschieden beim Herstellungsverfahren und/oder der Biomasse, aus der die Biokohlesorte hergestellt wird, in ihrer chemischen Zusammensetzung und/oder ihrer Porosität unterscheiden.

Vorzugsweise weist die Biokohle zumindest eine aus pflanzlicher Biomasse hergestellte Biokohlesorte auf. Insbesondere besteht die Biokohle aus zumindest einer aus pflanzlicher Biomasse hergestellten Biokohlesorte.

Vorzugsweise weist die Biokohle zumindest eine aus Holz hergestellte Biokohlesorte bzw. eine Holzkohlesorte auf. Insbesondere besteht die Biokohle aus zumindest einer aus Holz hergestellten Biokohlesorte bzw. Holzkohlesorte. Dies ist an der zelligen, porösen Struktur der Biokohlepartikel zu erkennen.

Die Biokohle kann aber auch vorteilhaft zumindest eine aus Klärschlamm hergestellte Biokohlesorte aufweisen.

Das Mahlhilfsmittel kann zu dem zu mahlenden Mahlgut in trockener, schüttfähiger Form oder in flüssiger Form zugegeben werden. Das trockene Mahlhilfsmittel kann selbstverständlich eine Restfeuchte aufweisen. Es kommt nur darauf an, dass es als loses Feststoffgemenge vorliegt.

Wird es in trockener Form zugegeben, besteht das Mahlhilfsmittel vorzugsweise zu mindestens 80 M.-%, bevorzugt zu mindestens 97 M.-%, besonders bevorzugt zu 100 M.-%, aus Biokohlepartikeln.

Wird das Mahlhilfsmittel in flüssiger Form zugegeben, handelt es sich vorzugsweise um eine Suspension. Die Suspension weist eine Flüssigphase auf, in der die Biokohlepartikel verteilt sind. Vorzugsweise weist die Suspension einen Gehalt an 3 bis 70 M.-%, bevorzugt 10 bis 60 M.-%, besonders bevorzugt 30 bis 50 M.-%, Biokohle, bezogen auf die Gesamtmasse des Mahlhilfsmittels auf. Die Flüssigphase besteht aus Wasser und/oder einer organischen Flüssigkeit. Vorzugsweise handelt es sich bei der organischen Flüssigkeit um eine Flüssigkeit, die ebenfalls die Mahlbarkeit verbessert, vorzugsweise um Triethanolamin (TEOA) und/oder Triisopropanolamin (TIPA) und/oder Polyglycol.

Des Weiteren kann das Mahlhilfsmittel auch weitere, insbesondere oberflächenaktive, Bestandteile in flüssiger und/oder fester Form enthalten, vorzugsweise zumindest ein Fließmittel, bevorzugt auf Basis von Ligninsulfonat, Naphthalinsulfonat oder Polycarboxylatether, und/oder zumindest einen Beschleuniger und/oder zumindest einen Verzögerer, vorzugsweise Natriumgluconat oder Kaliumgluconat oder Phosphorsäure, und/oder zumindest einen Chromatreduzierer, vorzugsweise auf Basis von Eisen(II)sulfat oder Zinn(Il)sulfat. Insbesondere die Fließmittel verbessern ebenfalls die Mahlbarkeit.

Der Chromatreduzierer kann aber auch Teil des Mahlguts sein oder nach dem Mahlen zugegeben werden.

Das erfindungsgemäße Mahlhilfsmittel wird zu dem zu mahlenden Mahlgut in an sich bekannter Weise vorzugsweise vor Beginn des Mahlvorgangs zugegeben.

Das trockene Mahlhilfsmittel wird vorzugsweise mittels einer an sich bekannten Dosiereinrichtung, insbesondere einer Pulverdosiereinrichtung, auf das sich auf einem Förderband befindende Mahlgut aufgegeben. Beispielsweise handelt es sich bei der Dosiereinrichtung um eine Dosierschnecke oder eine Zellenradschleuse.

Das flüssige Mahlhilfsmittel wird vorzugsweise auf das sich auf dem Förderband befindende Mahlgut aufgesprüht.

Das Mahlen erfolgt zudem in einer an sich bekannten Mühle, vorzugsweise in einer Mahlkörper aufweisenden Mühle, bevorzugt einer Kugelmühle, oder in einer rotierende Walzen aufweisenden Mühle, bevorzugt einer Walzenschüsselmühle oder einer Gutbettwalzenmühle, oder im Kombinationsmahlbetrieb aus Walzen- und Kugelmühle. Beim Kombinationsmahlbetrieb erfolgt eine Vormahlung in der Walzenmühle und die Endmahlung auf die gewünschte Endfeinheit in der Kugelmühle.

Der gesamte Mahlvorgang auf die gewünschte Endfeinheit kann also in einem oder mehreren Mahlschritten und lediglich in einer einzigen oder in mehreren verschiedenen Mühlen erfolgen.

Eine Mühle ist bekanntermaßen eine Anlage, eine Maschine oder ein Gerät, um stückiges Mahlgut zu einem fein- oder feinstkörnigen bzw. mehlförmigen Endprodukt zu zerkleinern.

Die gesamte Mahldauer beim Mahlen in einer Mahlkörper aufweisenden Mühle, vorzugsweise in einer Kugelmühle, beträgt zudem vorzugsweise 15 bis 45 Minuten, bevorzugt 20 bis 30 Minuten.

Außerdem erfolgt die Mahlung vorzugsweise bei einer Temperatur von 90 bis 130°C, bevorzugt 100 bis 120 °C. Die Temperatur wird in an sich bekannter Weise mittels eines IR-Thermometers gemessen.

Des Weiteren beträgt die Zugabemenge an Biokohle insgesamt vorzugsweise 0,05 bis 0,25 M.-%, bevorzugt 0,05 bis 0,10 M.-%, bezogen auf die Gesamtmasse an anorganischen Mahlgutpartikeln des Mahlguts.

Angegebene Massenanteile des Mahlgutes oder dessen Bestandteile beziehen sich im Rahmen der Erfindung selbstverständlich immer auf die Trockenmasse, sofern nichts anderes angegeben ist. Die Trockenmasse ist die Masse nach Trocknung auf Gewichtskonstanz bei 40°C.

Vorzugsweise weist die Biokohle zudem eine BET-Oberfläche von 100 bis 450 m²/g, bevorzugt von 120 bis 300 m²/g, besonders bevorzugt von 120 bis 240 m²/g, bestimmt gemäß DIN ISO 9277:2014-01, auf. Und/oder vorzugsweise weist die Biokohle eine BET-Oberfläche ≤ 450 m²/g, bevorzugt ≤ 300 m²/g, besonders bevorzugt ≤ 240 m²/g, bestimmt gemäß DIN ISO 9277:2014-01, auf.

Des Weiteren weist die Biokohle (wasserfrei=WF) vorzugsweise einen Kohlenstoffgehalt von ≥ 60 M.-%, bevorzugt ≥ 70 M.-%, besonders bevorzugt ≥ 85 M.-%, bestimmt gemäß DIN 51732:2014-07, auf.

Die Biokohle (wasserfrei=WF) weist außerdem vorzugsweise einen Gehalt an mineralischer Asche von 1,5 bis 30 M.-%, bevorzugt 2 bis 15 M.-%, bestimmt gemäß DIN 51719:1997-07 bei 550 °C auf.

Außerdem weist die Biokohle des trockenen Mahlhilfsmittels vorzugsweise eine maximale Korngröße ≤ 1000 µm, bevorzugt ≤ 500 µm, bestimmt mittels Laserlichtbeugung gemäß ISO 13320:2020-01, auf.

Und die Biokohle des flüssigen Mahlhilfsmittels weist vorzugsweise eine maximale Korngröße ≤ 100 µm, bestimmt mittels Laserlichtbeugung gemäß ISO 13320:2020-01, auf.

Wie bereits erläutert dient das erfindungsgemäße Mahlverfahren zum trockenen Mahlen eines stückigen Mahlgutes aufweisend Mahlgutpartikel aus zumindest einem anorganischen Material, vorzugsweise aus Zementklinker und/oder anderen Zementbestandteilen. Das Mahlverfahren dient also vorzugsweise zum Mahlen eines oder aller Zementbestandteile eines herzustellenden Zements bzw. einer Zementmischung. Der herzustellende Zement weist Zementklinker, in der Regel zumindest einen Erstarrungsregler, sowie gegebenenfalls weitere anorganische Zementbestandteile auf.

Wie bereits erläutert weist Zement gemäß der DIN 197-1:2011-11 Haupt- und gegebenenfalls Nebenbestandteile sowie zumindest einen Erstarrungsregler auf. Das erfindungsgemäße Mahlverfahren dient also vorzugsweise zum Mahlen eines oder mehrerer Haupt- und/oder Nebenbestandteile und/oder des Erstarrungsreglers.

Die herzustellende trockene, hydraulisch erhärtende, mehlförmige Zementmischung weist somit vorzugsweise 95-100 M.-% Hauptbestandteil(e) und 0-5 M.-% Nebenbestandteil(e), jeweils bezogen auf die Summe aus Haupt- und Nebenbestandteilen, sowie zusätzlich zu den Haupt- und Nebenbestandteilen zumindest einen Erstarrungsregler auf bzw. besteht daraus. Insbesondere besteht die herzustellende Zementmischung vorzugsweise zu mindestens 95 M.-%, bevorzugt zu 98 M.-%, besonders bevorzugt zu 100 M.-% aus den Haupt- und Nebenbestandteilen und Erstarrungsregler.

Analog wie in der DIN 197-1:2011-11 definiert, handelt es sich im Rahmen der Erfindung bei einem Hauptbestandteil um einen anorganischen Stoff, dessen Anteil mehr als 5 % der Gesamtsumme aller Haupt- und Nebenbestandteile beträgt. Ein Nebenbestandteil ist demgemäß ein anorganischer Stoff, dessen Anteil nicht mehr als 5 % der Gesamtsumme aller Haupt- und Nebenbestandteile beträgt. Die Haupt- und Nebenbestandteile sind dabei im Rahmen der Erfindung nicht auf die in der DIN 197-1:2011-11 genannten Stoffe beschränkt.

Bei dem zumindest einen Erstarrungsregler handelt es sich zudem vorzugsweise um eine Calciumsulfatkomponente, bevorzugt um Gips oder Halbhydrat oder Anhydrit. Dass der Zement zumindest einen Erstarrungsregler enthält, bedeutet, dass er auch eine Mischung aus verschiedenen Erstarrungsreglern enthalten kann.

Die Herstellung des Zements erfolgt dabei durch Mischen der einzelnen Zementbestandteile miteinander. Dabei werden die Zementbestandteile zumindest teilweise gemahlen, wobei die Zementbestandteile alle getrennt oder zumindest teilweise gemeinsam gemahlen werden können.

Vorzugsweise weist das Mahlgut also Mahlgutpartikel aus Zementklinker, bevorzugt Portlandzementklinker und/oder Tonerdezementklinker und/oder Calciumsulfoaluminatzementklinker, und/oder aus Erstarrungsregler, bevorzugt Gips und/oder Anhydrit und/oder Halbhydrat, und/oder aus Hüttensand und/oder aus Kalkstein und/oder aus einem natürlichen oder natürlich getemperten Puzzolan, bevorzugt calciniertem Ton und/oder Microsilica, und/oder aus Flugasche auf.

Dabei weisen die Mahlgutpartikel vorzugsweise vor dem Mahlen zumindest teilweise eine Korngröße > 500 µm, bevorzugt > 1000 µm auf.

Das Mahlgut wird zudem auf eine Korngröße ≤ 200 µm, vorzugsweise ≤ 150 µm, und/oder einen Blaine-Wert von ≥ 3500 cm²/g bestimmt gemäß DIN EN 196-6:2019-03, aufgemahlen. Es wird somit zu einem Mehl bzw. Pulver aufgemahlen.

### Ausführungsbeispiele:

Im Rahmen der Ausführungsbeispiele wurden folgende Rohstoffe mit folgenden Eigenschaften verwendet:

**Tabelle 1: Eigenschaften des Portlandzementklinkers PZK, Dyckerhoff GmbH**

| **Portlandzementklinker PZ1** | | |
|---|---|---|
| **Chemische Zusammensetzung (XRF)** | **SO₃-Gehalt [M.-%]** | 0,20 |
| | **Na₂O-Äquivalent [M.-%]** | 0,11 |
| **Mineralische Zusammensetzung (XRD)** | **C₃S-Gehalt [M.-%]** | 72,3 |
| | **C₂S-Gehalt [M.-%]** | 10,6 |
| | **C₃A-Gehalt [M.-%] (Kubisch)** | 5,6 |
| | **C₃A-Gehalt [M.-%] (Orthorhombisch)** | 0,7 |
| | **C₄AF-Gehalt [M.-%]** | 8,0 |
| **Korngröße** | **Maximale Korngröße [mm]** | 35 |

**Tabelle 2: Eigenschaften der Biokohle BK**

| **Biokohle BK (Carbuna AG)** | | |
|---|---|---|
| **Chemische Analyse (WF)** | **C-Gehalt [M.-%]** | 88 |
| | **Asche-Gehalt [M.-%]** | 9,5 |
| | **O/C-Verhältnis (molar)** | 0,026 |
| **Chemische Zusammensetzung (XRF)** | **Ca [%]** | 7,1 |
| | **Mg [ppm]** | 837 |
| | **Si [ppm]** | 800 |
| | **Fe [%]** | 0,73 |
| | **Zn [%]** | 0,14 |
| | **Na₂O-Äquivalent** | 1,01 |
| | **Cl [ppm]** | 320 |
| **Mineralische Zusammensetzung (XRD)** | **Amorpher Kohlenstoff [M.-%]** | 96,6 |
| | **Calcit [M.-%]** | 2,52 |
| | **Quarz [M.-%]** | 0,71 |
| | **Cristobalit [M.-%]** | 0,71 |
| **Korngröße** | **[mm]** | 0-0,1 |
| | **d₅₀ [µm]** | 10,02 |

**Tabelle 3: Eigenschaften des Triethanolamin**

| **Triethanolamin (TEOA), flüssig (Merck)** | | |
|---|---|---|
| **Spezifikation** | **Reinheit (GC)** | ≥ 99 M.-% |
| | **Ethanolamin (GC)** | ≤ 0,1 M.-% |
| | **Diethanloamin (GC)** | ≤ 0,5 M.-% |
| | **Wasser (nach Karl Fischer)** | ≤ 0,2 % |

**Tabelle 4: Eigenschaften des Anhydrits**

| **Anhydrit** | | |
|---|---|---|
| **Mineralische Zusammensetzung (XRD)** | **Anhydrit [M.-%]** | 100 |

**Tabelle 5: Eigenschaften des Halbhydrats**

| **Halbhydrat** | | |
|---|---|---|
| **Mineralische Zusammensetzung (XRD)** | **Bassanit [M.-%]** | 96,6 |
| | **Anhydrit [M.-%]** | 3,3 |

### Ausführungsbeispiel 1:

Im Rahmen dieses Ausführungsbeispiels wurde die Wirkung von Biokohle bei der Mahlung von jeweils 4 kg Portlandzementklinker in einer Planetenkugelmühle (FRITSCH GmbH Pulverisette (classic line) untersucht. Das Mahlhilfsmittel wies jeweils folgende Zusammensetzungen auf:

**Tabelle 6: Zusammensetzung des Mahlhilfsmittels und Dosierung**

| **Versuch** | **Gesamtmenge Mahlhilfsmittel bezogen auf Trockenmasse PZK [M.-%]** | **Zusammensetzung Mahlhilfsmittel [M.-%]** | | |
|---|---|---|---|---|
| | | **TEOA** | **Biokohle** | **Wasser** |
| **V1_{Klinker}** | 0 | - | - | - |
| **V2_{0,1 TEOA}** | 0,1 | 100 | - | - |
| **V3_{0,1 TEOA+BK}** | 0,1 | 50 | 50 | - |
| **V4_{0,1 BK+Wasser}** | 0,1 | - | 4 | 96 |
| **V5_{0,2 TEOA}** | 0,2 | 100 | - | - |
| **V6_{0,2 TEOA+BK}** | 0,2 | 50 | 50 | - |

Vor Beginn des Mahlvorgangs wurde der Portlandzementklinker in einem Brecher auf eine Korngröße ≤ 3 mm zerkleinert. Die Mahldauer in der Planetenmühle betrug 20 Minuten bei 400 U/min. Die Austrittstemperatur des Mahlguts betrug zwischen 80-130 °C.

Das flüssigen Mahlhilfsmittel wurden vor dem Mahlvorgang außerhalb der Mühle auf eine kleinere Menge des Portlandzementklinkers aufgetropft, vermischt und anschließend dem restlichen zu vermahlenden Portlandzementklinker zugegeben.

In nachstehender Tabelle sind die erreichten Feinheiten angegeben:

**Tabelle 7: Erreichte Feinheiten**

| | | **Lasergranulometrie** | | |
|---|---|---|---|---|
| **Versuch** | **Mahldauer [Minuten]** | **d₅₀ [µm]** | **d'** | **n** |
| **V1_{Klinker}** | 20 | 24,52 | 35,22 | 0,90 |
| **V2_{0,1TEOA}** | 20 | 11,63 | 17,33 | 0,78 |
| **V3_{0,1TEOA+BK}** | 20 | 16,52 | 23,39 | 0,87 |
| **V4_{0,1 BK+Wasser}** | 20 | 14,60 | 20,81 | 0,86 |
| **V5_{0,2 TEOA}** | 20 | 10,86 | 16,14 | 0,79 |
| **V6_{0,2 TEOA+BK}** | 20 | 11,59 | 17,28 | 0,79 |

Aus Tabelle 7 ist zu erkennen, dass das ohne Mahlhilfsmittel gemahlene Klinkermehl deutlich gröber ist als die mit einem Mahlhilfsmittel gemahlenen Klinkermehle. Insbesondere führt die Verwendung von ausschließlich Biokohle als Mahlhilfsmittel (V4_{0,1 BK+Wasser}) zu einem 40 % geringeren d₅₀-Wert.

### Ausführungsbeispiel 2:

Im Rahmen dieses Ausführungsbeispiels wurde die Wirkung von Biokohle bei der Mahlung von jeweils 4 kg Portlandzementklinker in einer Labor-Kugelmühle untersucht. Das Mahlhilfsmittel wies jeweils folgende Zusammensetzungen auf:

**Tabelle 8: Zusammensetzung des Mahlhilfsmittels und Dosierung**

| **Versuch** | **Gesamtmenge Mahlhilfsmittel bezogen auf Trockenmasse PZK** | **Zusammensetzung Mahlhilfsmittel** | | |
|---|---|---|---|---|
| | **[M.-%]** | **[M.-%]** | | |
| | | **TEOA** | **Biokohle** | **Wasser** |
| **V7_{Klinker 24 Min}** | **0** | **-** | **-** | **-** |
| **V8_{Klinker 30 Min}** | 0 | - | - | - |
| **V9_{0,05 TEOA}** | 0,05 | 100 | - | - |
| **V10 _{0,1 TEOA}** | 0,1 | 100 | - | - |
| **V11 _{0,05 BK}** | 0,05 | - | 100 | - |
| **V12_{0,1 BK}** | 0,1 | - | 100 | - |
| **V13_{0,125 TEOA+BK+Wasser}** | 0,125 | 40 | 40 | 20 |
| **V14_{0,25 TEOA+BK+Wasser}** | 0,25 | 40 | 40 | 20 |

Die Mahldauer betrug in der Regel 24 Minuten. Sie wurde basierend darauf festgelegt, dass ein Blaine-Wert von 4000 cm²/g erzielt werden sollte. Da bei der Mahlung ohne Mahlhilfsmittel (V7) lediglich ein Blaine-Wert von 3390 cm²/g erzielt wurde, wurde eine weitere Mahlung des reinen Portlandzementklinkers mit einer Mahldauer von 30 Minuten durchgeführt (V8). Die Mühlentemperatur betrug 100 bis 121,3°C.

Das flüssigen Mahlhilfsmittel wurden vor dem Mahlvorgang außerhalb der Mühle auf eine kleinere Menge des Portlandzementklinkers aufgetropft, vermischt und anschließend dem restlichen zu vermahlenden Portlandzementklinker zugegeben.

Das aus der reinen Biokohle bestehende Mahlhilfsmittel wurde vor dem Mahlvorgang außerhalb der Mühle mit einer geringen Menge des Portlandzementklinkers vorhomogenisiert und anschließend dem restlichen zu vermahlenden Portlandzementklinker zugegeben.

In nachstehender Tabelle sind die erreichten Feinheiten angegeben:

**Tabelle 9: Erreichte Feinheiten**

| | | | **Lasergranulometrie** | |
|---|---|---|---|---|
| **Versuch** | **Mahldauer [Minuten]** | **Blaine-Wert [cm²/g]** | **d'** | **n** |
| **V7_{Klinker 24 Min}** | 24 | 3390 | 20,01 | 0,74 |
| **V8_{Klinker 30 Min}** | 30 | 3830 | 16,32 | 0,75 |
| **V9**_{**0,05** TEOA} | 24 | 4220 | 15,68 | 0,74 |
| **V10_{0,1 TEOA}** | 24 | 4000 | 16,79 | 0,89 |
| **V11_{0,05 BK}** | 24 | 4160 | 15,65 | 0,76 |
| **V12_{0,1 BK}** | 24 | 4260 | 15,76 | 0,73 |
| **V13_{0,125 TEOA+BK+Wasser}** | 24 | 3900 | 15,16 | 0,75 |
| **V14_{0,25 TEOA+BK+Wasser}** | 24 | 4220 | 15,60 | 0,82 |

Aus Tabelle 9 ist zu erkennen, dass, unabhängig von dem verwendeten Mahlhilfsmittel (Triethanolamin (TEOA), Biokohle oder TEOA-Biokohle-WasserSuspension) nach einer Mahldauer von 24 Minuten Feinheiten erzielt wurden, die sich deutlich von der Labor-Mahlung ohne Mahlhilfsmittel (Mahldauer ebenfalls 24 Minuten) unterschieden. Untereinander hatten die mit Mahlhilfsmittel hergestellten Klinkermehle annähernd vergleichbare Feinheiten.

Um den Einfluss auf die Zementhydratation zu erfassen wurde die Zement-Druckfestigkeit von Mörtelprismen gemäß DIN EN 196-1:2016-11 geprüft.

Mit den 8 hergestellten Klinkermehlen und den beiden Erstarrungsreglern wurde je ein Norm-Mörtel hergestellt. Die Zusammensetzung des Norm-Mörtels war jeweils wie folgt:

**Tabelle 10: Zusammensetzung des Norm-Mörtels**

| | **Menge [g]** |
|---|---|
| **Klinkermehl** | 427 |
| **Halbhydrat** | 9,5 |
| **Anhydrit** | 13,5 |
| **Normensand** | 1350 |
| **Wasser** | 225 |

An jedem Mörtel M7-M14 wurde pro Prüftermin an einem Prisma die Biegezugfestigkeit und an den beiden Prismen-Hälften die Druckfestigkeit bestimmt. Geprüft wurde im Alter von 2 Tagen, 7 Tagen und 28 Tagen. Die Biegezug- und Druckfestigkeiten sind in der nachfolgenden Tabelle zusammen mit den erzielten Feinheiten aufgelistet:

**Tabelle 11: Biegezug- und Druckfestigkeiten**

| | | **Biegezugfestigkeit [MPa]** | | | **Druckfestigkeit [MPa]** | | |
|---|---|---|---|---|---|---|---|
| **Versuch** | **Blaine-Wert [cm²/g]** | **2 Tage** | **7 Tage** | **28 Tage** | **2 Tage** | **7 Tage** | **28 Tage** |
| **M7_{Klinker 24 Min}** | 3390 | 4,4 | 6,8 | 8,4 | 22,1 | 40,1 | 61,6 |
| **M8_{Klinker 30 Min}** | 3830 | 4,8 | 7,3 | 8,6 | 25,8 | 47,6 | 59,2 |
| **M9_{0,05 TEOA}** | 4220 | 4,8 | 7,4 | 8,0 | 24,5 | 47,5 | 63,2 |
| **M10_{0,1 TEOA}** | 4000 | 5,8 | 7,0 | 8,0 | 28,0 | 50,1 | 59,5 |
| **M11_{0,05 BK}** | 4160 | 4,7 | 6,9 | 8,2 | 29,1 | 50,6 | 63,5 |
| **M12_{0,1 BK}** | 4260 | 5,3 | 7,6 | 7,5 | 27,3 | 48,4 | 64,6 |
| **M13_{0,125 TEOA+BK+Wasser}** | 3900 | 5,9 | 6,9 | 7,5 | 29,1 | 46,3 | 58,1 |
| **M14_{0,25 TEOA+BK+Wasser}** | 4220 | 5,0 | 7,1 | 7,5 | 25,7 | 45,3 | 65,1 |

Die Druckfestigkeitsentwicklung der Mörtelprismen (24 Min. Mahldauer) bis zum Alter von 28 Tagen sind in Fig.1 dargestellt.

Bei den Festigkeiten sind keine größeren Auffälligkeiten zu erkennen. Die Endfestigkeiten geben keinen Hinweis auf einen nachteiligen Einfluss auf die Zementhydratation. Die Frühfestigkeiten konnten verbessert werden.

Abschließend wird darauf hingewiesen, dass alle genannten, insbesondere beanspruchten, Merkmale des Mahlverfahrens, der Biokohle und des Herstellungsverfahrens für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

## Patentansprüche

1. Mahlverfahren zum trockenen Mahlen eines stückigen Mahlgutes unter Verwendung eines Mahlhilfsmittels, wobei das Mahlgut Mahlgutpartikel aus zumindest einem anorganischen Material, vorzugsweise aus zumindest einem Zementklinker, aufweist und wobei das Mahlhilfsmittel zum Mahlgut vor oder während dem Mahlen zugegeben wird,
**dadurch gekennzeichnet, dass**
zumindest ein Biokohle enthaltendes Mahlhilfsmittel zugegeben wird.

2. Mahlverfahren nach Anspruch 1,
**dadurch gekennzeichnet, dass**
die Zugabemenge an Biokohle insgesamt 0,05 bis 0,25 M.-%, bevorzugt 0,05 bis 0,10 M.-%, beträgt, bezogen auf die Gesamtmasse der Mahlgutpartikel aus anorganischem Material.

3. Mahlverfahren nach Anspruch 1 oder 2,
**dadurch gekennzeichnet, dass**
das Mahlgut Mahlgutpartikel aus zumindest einem Zementklinker, bevorzugt Portlandzementklinker und/oder Tonerdezementklinker und/oder Calciumsulfoaluminatzementklinker, und/oder aus zumindest einem anderen, anorganischen Zementbestandteil aufweist.

4. Mahlverfahren nach einem der vorhergehenden Ansprüche,
**dadurch gekennzeichnet, dass**
das Mahlgut Mahlgutpartikel aus Zementklinker, bevorzugt Portlandzementklinker und/oder Tonerdezementklinker und/oder Calciumsulfoaluminatzementklinker, und/oder aus Erstarrungsregler, bevorzugt Gips und/oder Anhydrit und/oder Halbhydrat, und/oder aus Hüttensand und/oder aus Kalkstein und/oder aus einem natürlichen oder natürlich getemperten Puzzolan, bevorzugt calciniertem Ton und/oder Microsilica, und/oder aus Flugasche aufweist.

5. Mahlverfahren nach einem der vorhergehenden Ansprüche,
**dadurch gekennzeichnet, dass**
das Mahlgut zu einem Mehl auf eine Korngröße ≤ 200 µm, vorzugsweise ≤ 150 µm, bestimmt mittels Laserlichtbeugung gemäß ISO 13320:2020-01 und/oder auf einen Blaine-Wert von ≥ 3500 cm²/g, bestimmt gemäß DIN EN 196-6:2019-03, aufgemahlen wird.

6. Mahlverfahren nach einem der vorhergehenden Ansprüche,
**dadurch gekennzeichnet, dass**
a) die Biokohle zumindest eine aus pflanzlicher Biomasse, bevorzugt aus Holz, hergestellte Biokohlesorte aufweist, wobei die Biokohle vorzugsweise aus zumindest einer aus pflanzlicher Biomasse, bevorzugt aus Holz, hergestellten Biokohlesorte besteht, und/oder
b) die Biokohle zumindest eine aus Klärschlamm hergestellte Biokohlesorte aufweist.

7. Mahlverfahren nach einem der vorhergehenden Ansprüche,
**dadurch gekennzeichnet, dass**
das zumindest eine Mahlhilfsmittel in trockener Form oder in flüssiger Form vorliegt und zugegeben wird.

8. Mahlverfahren nach Anspruch 7,
**dadurch gekennzeichnet, dass**
das trockene Mahlhilfsmittel zu mindestens 80 M.-%, bevorzugt zu mindestens 97 M.-%, besonders bevorzugt zu 100 M.-%, aus Biokohlepartikeln besteht.

9. Mahlverfahren nach Anspruch 7 oder 8,
**dadurch gekennzeichnet, dass**
das flüssige Mahlhilfsmittel eine Suspension ist, die eine Flüssigphase aufweist, in der die Biokohlepartikel verteilt sind, wobei die Flüssigphase vorzugsweise aus Wasser und/oder einer organischen Flüssigkeit besteht, wobei es sich bei der organischen Flüssigkeit vorzugsweise um eine Flüssigkeit handelt, die ebenfalls die Mahlbarkeit verbessert, bevorzugt um Triethanolamin (TEOA) und/oder Triisopropanolamin (TIPA), wobei vorzugsweise die Suspension einen Gehalt an 3 bis 70 M.-%, vorzugsweise 10 bis 60 M.-%, bevorzugt 30 bis 50 M.-%, Biokohle, bezogen auf die Gesamtmasse des Mahlhilfsmittels aufweist.

10. Mahlverfahren nach einem der vorhergehenden Ansprüche,
**dadurch gekennzeichnet, dass**
das zumindest eine Mahlhilfsmittel weitere Bestandteile in flüssiger und/oder fester Form aufweist, vorzugsweise zumindest ein Fließmittel, bevorzugt auf Basis von Ligninsulfonat, Naphthalinsulfonat oder Polycarboxylatether, und/oder zumindest einen Verzögerer, vorzugsweise Natriumgluconat oder Kaliumgluconat oder Phosphorsäure, und/oder zumindest einen Beschleuniger und/oder zumindest einen Chromatreduzierer, vorzugsweise auf Basis von Eisen(II)sulfat oder Zinn(II)sulfat.

11. Mahlverfahren nach einem der vorhergehenden Ansprüche,
**dadurch gekennzeichnet, dass**
a) die Biokohle des zumindest einen Mahlhilfsmittels eine BET-Oberfläche von 100 bis 450 m²/g, bevorzugt von 120 bis 300 m²/g, besonders bevorzugt von 120 bis 240 m²/g, und/oder eine BET-Oberfläche ≤ 450 m²/g, bevorzugt ≤ 300 m²/g, besonders bevorzugt ≤ 240 m²/g, bestimmt jeweils gemäß DIN ISO 9277:2014-01 aufweist, und/oder
b) die Biokohle (wasserfrei) des zumindest einen Mahlhilfsmittels einen Kohlenstoffgehalt von ≥ 60 M.-%, vorzugsweise ≥ 70 M.-%, bevorzugt ≥ 85 M.-%, bestimmt gemäß DIN 51732:2014-07, aufweist, und/oder
c) die Biokohle mineralische Asche aufweist, wobei die Biokohle (wasserfrei) vorzugsweise einen Gehalt an mineralischer Asche von 1,5 bis 30 M.-%, bevorzugt 2 bis 15 M.-%, bestimmt gemäß DIN 51719:1997-07 bei 550 °C aufweist.

12. Mahlverfahren nach einem der Ansprüche 7 bis 11,
**dadurch gekennzeichnet, dass**
die Biokohle des zumindest einen trockenen Mahlhilfsmittels eine maximale Korngröße ≤ 1000 µm, bevorzugt ≤ 500 µm, bestimmt mittels Laserlichtbeugung gemäß ISO 13320:2020-01, aufweist und/oder die Biokohle des zumindest einen flüssigen Mahlhilfsmittels eine maximale Korngröße ≤ 100 µm, bestimmt mittels Laserlichtbeugung gemäß ISO 13320:2020-01, aufweist.

13. Mahlverfahren nach einem der vorhergehenden Ansprüche,
**dadurch gekennzeichnet, dass**
a) das Mahlen in einer Mühle, vorzugsweise in einer Mahlkörper aufweisenden Mühle, bevorzugt einer Kugelmühle, oder in einer rotierende Walzen aufweisenden Mühle, bevorzugt einer Walzenschüsselmühle oder einer Gutbettwalzenmühle, oder im Kombinationsmahlbetrieb aus Walzen- und Kugelmühle erfolgt,
und/oder
b) die Mahldauer in einer Mahlkörper aufweisenden Mühle, vorzugsweise in einer Kugelmühle, 15 bis 45 Minuten, bevorzugt 20 bis 30 Minuten, beträgt.

14. Verfahren zur Herstellung eines trockenen, hydraulisch erhärtenden, Zements, aufweisend zumindest einen Zementklinker, bevorzugt Portlandzementklinker und/oder Tonerdezementklinker und/oder Calciumsulfoaluminatzementklinker, gegebenenfalls zumindest einen Erstarrungsregler, sowie gegebenenfalls zumindest einen weiteren anorganischen Zementbestandteil, wobei die einzelnen anorganischen Zementbestandteile zur Herstellung des Zements miteinander vermischt werden und zumindest teilweise vor und/oder nach dem Mischen gemahlen werden, wobei die Zementbestandteile getrennt voneinander oder zumindest teilweise gemeinsam gemahlen werden,
**dadurch gekennzeichnet, dass**
die Zementbestandteile zumindest teilweise gemäß dem Mahlverfahren gemäß einem der vorhergehenden Ansprüche gemahlen werden.

15. Verfahren nach Anspruch 14,
**dadurch gekennzeichnet, dass**
zumindest ein Zementklinker gemäß dem Mahlverfahren gemäß einem der Ansprüche 1 bis 13 gemahlen wird.

16. Verfahren nach Anspruch 14 oder 15,
**dadurch gekennzeichnet, dass**
ein Zement hergestellt wird, der 95-100 M.-% Hauptbestandteil(e) und 0-5 M.-% Nebenbestandteil(e), jeweils bezogen auf die Summe aus Haupt- und Nebenbestandteilen, sowie zusätzlich zu den Haupt- und Nebenbestandteilen zumindest einen Erstarrungsregler aufweist.
